# EUROPEAN PATENT APPLICATION

(11) **EP 0 534 573 A1**
(43) Date of publication of application: **31.03.1993**
(21) Application number: 92202979.8
(22) Date of filing: 28.09.1992
(51) Int. Cl.: A23K 1/14, A23L 1/211

(54) **Method and device for reducing the amount of anti-nutritional factors in a mixture of raw material for animal feed**

(30) Priority: 27.09.1991 NL 9101643
(71) Applicant: SCHOUTEN GROUP N.V., NL-4283 GG Giessen (NL)
(72) Inventor: Van Bruggen, Jakob, NL-3341 CL Hendrik Ido Ambacht (NL); Veth, Paul Sebastiaan, NL-5271 JE St. Michelsgestel (NL)
(74) Representative: Hoijtink, Reinoud

(57) **Abstract**

The invention relates to a method for reducing the amount of anti-nutritional factors in a raw material mixture for producing an ingredient for animal feed such as cattle fodder or domestic animal feed, which raw material mixture contains at least rape seed in a quantity between 1 and 100%, by subjecting the raw material mixture to a steam treatment for a predetermined time at a predetermined temperature. Due to the steam treatment the anti-nutritional factors are at least partially broken down and determined constituents such as fats also become better accessible, whereby the nutritional value of the final animal feed increases. The invention also provides a device for performing the method, which device comprises at least a steam treatment unit.

## Description

The invention relates to a method for reducing the quantity of anti-nutritional factors in a raw material mixture for producing an ingredient for animal feed such as cattle fodder or feed for domestic animals.

Cattle fodders in particular can contain different ingredients such as cereals, seeds and pulses. Some of these may contain natural components which greatly limit the use of the ingredient in cattle fodder. These so-called anti-nutritional factors comprise for instance trypsin-inhibitors in soya beans or the enzyme mirosinase in rape seed. Mirosinase converts the comparatively harmless glucosinolates in rape seed into the harmful products isothiocyanate (ITC) and vinyl-thio-oxazolydone (VTO). The products ITC and VTO are particularly harmful for single-stomach animals.

It is the object of the present invention to provide a method and device for treating a raw material mixture for producing an ingredient for animal feed with which the amount of anti-nutritional factors in the raw material mixture can be reduced.

This is achieved by the invention with a raw material mixture containing at least rape seed in a quantity between 1 and 100% by subjecting the raw material mixture to a steam treatment for a predetermined time at a predetermined temperature. Due to the steam treatment the enzyme mirosinase from the rape seed is broken down along with others whereby the comparatively harmless glucosinolates can no longer be converted into the harmful substances ITC and VTO. In addition the digestibility of the very energy-rich rape seed oil is found to improve considerably, which results in a higher energy value of the formed ingredient.

One or more additives can optionally be added to the raw material mixture prior to or during the steam treatment. Such additives can for instance break down determined anti-nutritional constituents. It is for example possible to break down the substance sinapine with the correct chemicals. Sinapine is per se harmless but in the case of chickens is converted in the body into a substance which causes a fishy odour of the eggs.

The method according to the invention is likewise applicable to raw material mixtures which in addition to rape seed contain at least one constituent selected from the group consisting of broad bean (*Vicia faba*), peas, lupines, fodder beans (*Phaseolus vulgaris*) and soya beans.

In preference the raw material mixture contains 99% by weight rape seed.

In another preferred embodiment of the invention the raw material mixture consists of 50% by weight rape seed and 50% by weight broad beans. Due to the method according to the invention the amounts of anti-nutritional factors in broad beans, such as trypsin-inhibitors and lectins, in such a raw material mixture are likewise considerably reduced.

It may be desirable in the case of particular constituents to additionally moisten the raw material mixture prior to or during the steam treatment.

The raw material mixture is preferably reduced in size prior to the steam treatment whereby the different constituents become better accessible by the steam. This of particular importance when the raw material mixture contains one or more other constituents in addition to rape seed.

In preference the formed cattle fodder ingredient is crushed after the steam treatment. The nutrients in the raw material mixture hereby become more easily accessible.

The so-called "00" variety of rape seed is preferably used. This variety contains high-grade oils as well as a relatively low level of glucosinolates (less than 35 micromol per gram). The use of these "00" varieties is particularly encouraged by the EC. Despite the low level of glucosinolates, untreated rape seed still contains too many anti-nutritional factors to be used as raw material ingredient for producing animal feed for most single-stomach animals and for feed for domestic animals.

It has been found that the method according to the invention, which only comprises a steam treatment and no or hardly any additional treatments, effects a significant reduction in the amount of anti-nutritional factors in diverse raw material mixtures. The result is a higher energy value of the raw material mixture. In addition the method according to the invention is relatively inexpensive.

The present invention further relates to a device for performing the method according to the invention, which device comprises: a supply container for the raw material mixture; a steam treatment unit consisting of mutually connected compartments placed on one another, means for setting and keeping in motion the raw material mixture in the compartments, means for generating steam and means for feeding the steam to the compartments; and means for feeding the raw material mixture to the steam treatment unit.

The device can however be augmented with a cleaning unit and a second supply container which are arranged between the first supply container and the steam treatment unit. Among other things such a cleaning unit may comprise sieves and magnets.

In order to crush the formed cattle fodder ingredient rollers can be incorporated in the device following the steam treatment unit.

The device may optionally also comprise means for placing the steam under a slight pressure in the compartments of the steam treatment unit. By applying pressure the temperature of the steam can be raised slightly.

## Claims

1. Method for reducing the amount of anti-nutritional factors in a raw material mixture for producing an ingredient for animal feed such as cattle fodder or feed for domestic animals, which raw material mixture contains at least rape seed in a quantity between 1 and 100%, by subjecting the raw material mixture to a steam treatment for a predetermined time at a predetermined temperature.

2. Method as claimed in claim 1, **characterized in that** the predetermined temperature lies between 100 and 105°C and is preferably 103°C.

3. Method as claimed in claim 1 or 2, **characterized in that** at least one additive is added to the raw material mixture prior to or during the steam treatment.

4. Method as claimed in any of the claims 1-3, **characterized in that** additional moisture is added to the raw material mixture prior to or during the steam treatment.

5. Method as claimed in any of the claims 1-4, **characterized in that** the raw material mixtures contains in addition to rape seed at least one constituent selected from the group consisting of broad bean (*Vicia faba*), peas, lupines, fodder beans (*Phaseolus vulgaris*) and soya beans.

6. Method as claimed in any of the claims 1-5, **characterized in that** the raw material mixture contains 99% by weight rape seed.

7. Method as claimed in any of the claims 1-5, **characterized in that** the raw material mixture consists of 50% by weight rape seed and 50% by weight broad beans (*Vicia faba*).

8. Method as claimed in any of the claims 1-7, **characterized in that** the raw material mixture is reduced in size prior to the steam treatment.

9. Method as claimed in any of the claims 1-8, **characterized in that** the formed animal feed ingredient is crushed after the steam treatment.

10. Device for performing the method as claimed in any of the foregoing claims, comprising a supply container for the raw material mixture; a steam treatment unit consisting of a number of mutually connected compartments placed on one another, means for setting and keeping in motion the raw material mixture in the compartments, means for generating steam and means for feeding the steam to the compartments; and means for feeding the raw material mixture to the steam treatment unit.

11. Device as claimed in claim 10, **characterized in that** a cleaning unit and a second supply container for cleaned product are arranged in the device between the supply container and the steam treatment unit.

12. Device as claimed in claim 10 or 11, **characterized in that** rollers are incorporated in the device after the steam treatment unit to crush the formed ingredient.

13. Device as claimed in claim 10, 11 or 12, **characterized by** means for placing the steam under pressure in the compartments of the steam treatment unit.

14. Device as claimed in any of the claims 10-13, **characterized by** means for moistening the raw material mixture.
